# EUROPEAN PATENT APPLICATION

(11) **EP 4 198 713 A1**
(43) Date of publication of application: **21.06.2023**
(21) Application number: 21461638.5
(22) Date of filing: 20.12.2021
(51) Int. Cl.: G06F 8/35, G06F 9/455, G06F 8/10, G06Q 10/06

(54) **A METHOD FOR HANDLING AND PROCESSING EXECUTABLE DATA FLOWS BASED ON DESIGN OF A PROCESS**

(71) Applicant: 3Soft Spolka Akcyjna, Katowice (PL)
(72) Inventor: FOLKERT, Kamil, Tychy (PL); MIROWSKI, Tomasz, Swierklaniec (PL); GRZYWA, Lukasz, Leboszowice (PL)
(74) Representative: Kancelaria Eupatent.pl Sp. z.o.o

(57) **Abstract**

A computer-implemented system for handling and processing executable data flows. The system comprises a cloud environment (110) comprising: a flow management and orchestration component (111, 215), a container application development environment (112), and a computing engine (113, 114) configured to operate on Big Data. The system further comprises a database (214) at a customer premises environment (130) that stores data to be processed. The container application development environment (112) is configured to handle an application component (210) to provide a user interface (311) to receive from a user a graphical view of a business process flow and a converter component (212) to convert (320) the graphical view to a Business Process Model and Notation (BPMN) model. The flow management and orchestration component (111, 215) is configured to translate (325) the BPMN model into a set of executable tasks (326), import (333) data to be processed from the database (214) and to delegate (327) execution of the set of executable tasks to the computing engine (113, 114).

## Description

### TECHNICAL FIELD

The present invention relates to the field of Big Data processing, in particular to computer-implemented converting a design of a process specified in Business Process Model and Notation (BPMN) into a set of executable data flows able to operate on massive amounts of data, as well as to executing these data flows.

### BACKGROUND

ISO/IEC 19510:2013 standard "Information technology - Object Management Group Business Process Model and Notation" provides a notation that is readily understandable by all business users, from the business analysts that create the initial drafts of the processes, to the technical developers responsible for implementing the technology that will perform those processes, and finally, to the business people who will manage and monitor those processes. It creates a standardized bridge for the gap between the business process design and process implementation. Business Process Model and Notation (BPMN) represents the amalgamation of best practices within the business modelling community to define the notation and semantics of Collaboration diagrams, Process diagrams, and Choreography diagrams. The intent of ISO/IEC 19510:2013 is to standardize a business process model and notation in the face of many different modelling notations and viewpoints. ISO/IEC 19510:2013 provides a simple means of communicating process information to other business users, process implementers, customers, and suppliers. The process has been originally developed by the Business Process Management Initiative (BPMI) and maintained by the Object Management Group (OMG).

Although BPLMN diagrams are easily understandable to humans, they are not directly implementable for computers. There are some known solutions able to convert BPNM in some format of executable processes, none of them is proven to be able to process massive amounts of data. The reason for that is, many of these solutions were created when the Big Data technologies were gaining the momentum, however, were not used as a mainstream solution in business applications that require a user-friendly design and process notation.

A publication by Ouyang, Chun, et al. "Translating BPMN to BPEL" (2006) describes mapping BPMN models to Business Process Execution Language for Web Services (BPEL), which is a mainly block-structured language supported by several execution platforms. It primarily focuses on technical aspect of conversion of the notations. BPMN and BPEL represent two different classes of languages, which generates a number of challenges. The main limitation of BPEL is that it's predominantly designed as an extension of imperative programming languages with construct specific to web services. Therefore, it was not designed to be used to constitute and execute asynchronous data flow, especially dedicated to process a lot of data, often in continuous mode.

US8346520 discloses methods and systems to dynamically configure a process model based on process execution context. A system to dynamically configure a process model can include a context engine, a rules engine, and a business process engine. The context engine can maintain context information related to an executable business process model.

US8209672 discloses systems and methods for transforming modeled business processes into executable processes. The modeled processes may comprise graphically modeled business processes. The executable processes may comprise processes suitable for execution by a computerized or software-based system. Transformation rules are provided for mapping or converting, for example, EPC model constructs to BPEL constructs.

### SUMMARY

The approaches taken so far to convert BPMN into executable data flows are not efficient to handle Big Data flows.

Therefore, there is a need to provide an improved mechanism, designed specifically to address a set of requirements related to how Big Data flows need to be executed, considering the number of features required to enable the system to be used in production in real-life business solutions, including defining, scheduling, staging, logging, and monitoring the process.

The method of the invention allows to convert the design of a process specified in BPMN into a set of executable data flows able to operate on massive amounts of data (Big Data). It schedules and executes the converted data flows in an on-premises environment or in a cloud environment based on Big Data technologies. Moreover, it provides process execution feedback, so the monitoring features of the process can be realized directly in a process designer user interface (UI), which is used to define the processes in BPMN

In the present invention, each process is mapped into its static definition (or definitions, depending on the number of versions of the process) and dynamic execution instances that process the data alongside the process steps. The provided mechanism is effective (in terms of time and resources required) in converting BPMN-based context of the data used in the process into a quantitative set of computational processes that can be run in parallel in a cluster-based architecture. The context of data used in the process can be narrowed by the user during process definition, with use of business rules defined with FEEL language constructions.

The system presented herein can be implemented using Java, however other object-oriented programming languages could be used to constitute a working software realizing the same paradigm of conversion BPMN in executable processes.

The high-level application architecture of the system consists of two modules:
- Publisher, including elements such as flow management and orchestration component, an application component, a UI component and a converter component, which is responsible for BMPN model validation and conversion, as well as version control;
- Executor, that is responsible for scheduling and running process instances (by delegating tasks to process execution engine), providing input and collecting output data, as well as monitoring feedback.

The system according to the invention provides a unique value in terms of a possibility to translate business processes into sets of executable data flows and computational processes through a user-friendly process designer (with a user interface) and business rules. This mechanism allows business and non-technical users with a basic BPMN knowledge to design, build, schedule and execute complex business processes that operate on massive amounts of data and engage Big Data technologies. In addition, any process can be tracked real-time in monitoring user interface (UI), so each phase of any process is closely controlled what allows to react immediately if any error occurs.

In one aspect, the invention relates to a computer-implemented system for handling and processing executable data flows. The system comprises a cloud environment comprising: a flow management and orchestration component, a container application development environment, and a computing engine configured to operate on Big Data. The system further comprises a database at a customer premises environment that stores data to be processed. The container application development environment is configured to handle an application component to provide a user interface to receive from a user a graphical view of a business process flow and a converter component to convert the graphical view to a Business Process Model and Notation (BPMN) model. The flow management and orchestration component is configured to translate the BPMN model into a set of executable tasks, import data to be processed from the database and to delegate execution of the set of executable tasks to the computing engine.

The computing engine can be a distributed computing engine that is configured to run on an engine for clusters.

The computing engine can be a container management cluster that is configured to run on top of a containerized environment.

The flow management and orchestration component can be configured to delegate execution of the set of executable tasks by means of an engine for automating data flows that is an Apache NiFi engine.

The invention also relates to a computer-implemented method for handling and processing executable data flows. The method comprises providing a user interface to receive from a user a graphical view of a business process flow; converting the graphical view to a Business Process Model and Notation (BPMN) model; translating the BPMN model into a set of executable tasks; delegating execution of the set of executable tasks to an engine for automating data flows, wherein the engine for automating data flows is configured to operate on Big Data; and, within the engine for automating data flows, importing data to be processed and executing the set of executable tasks upon the data to be processed at a computing engine to aggregate data and to determine a data forecast.

The method may further comprise storing results for monitoring.

The data to be processed can be sales data.

These and other features, aspects and advantages of the invention will become better understood with reference to the following drawings, descriptions and claims.

### BRIEF DESCRIPTION OF DRAWINGS

Various embodiments are herein described, by way of example only, with reference to the accompanying drawings, wherein:
Fig.1 shows a functional schematic of an environment for application deployment;
Fig. 2 shows network interconnections between components.
Fig. 3 shows a diagram of functional components and interactions between system components.

### DETAILED DESCRIPTION OF EMBODIMENTS

The following detailed description is of the best currently contemplated modes of carrying out the invention. The description is not to be taken in a limiting sense but is made merely for the purpose of illustrating the general principles of the invention.

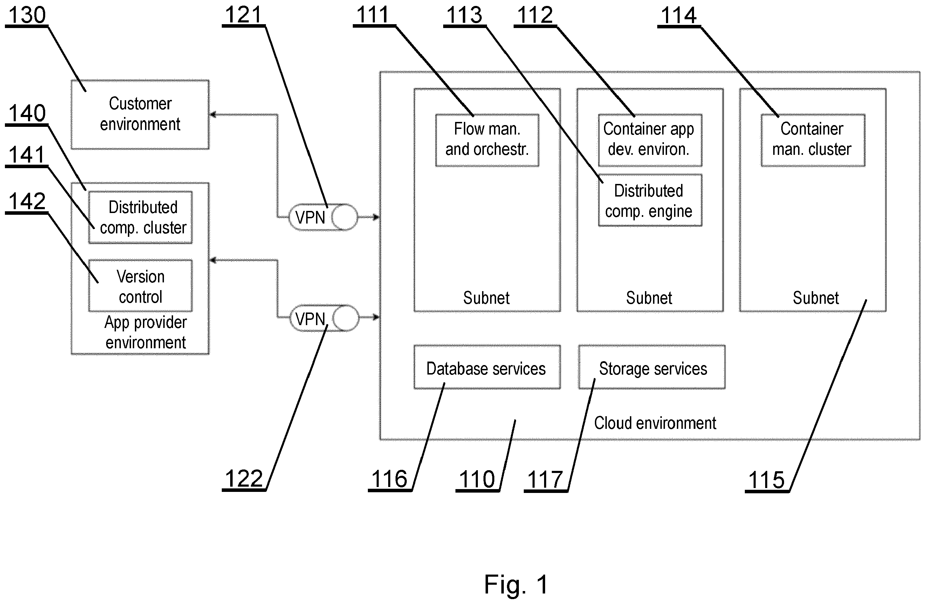

Fig.1 shows a functional schematic of an environment for application deployment.

A cloud environment 110 handles core components, namely: a flow management and orchestration component 111, a container application (app) development environment 112, a distributed computing engine 113 and a container management cluster 114. The individual components: 111, 112 and 113, 114 are arranged in subnets 115 (i.e. distinct fragments of network infrastructure) that function as containers, which increases the security and accessibility to particular components. Further, the cloud environment 110 comprises a database component 116 and storage services component 117.

The container application development environment 112 serves as a front user interface (UI) and a file validator (such as a validator for XML (Extensible Markup Language) files) - it is configured to provide a presentation layer in which a user may create, run and publish flows. Those flows contain business rules defined in BPMN and FEEL Language expressions to validate rules. The flow management and orchestration component 111 includes a converter and an engine for automating data flows between components (for example, an Apache NiFi engine, which is a *de facto* standard for data in-motion process execution in the landscape of Big Data technologies) - it is configured to generate tasks from the user input and then to execute these tasks on the distributed computing engine 113 or the container management cluster 114. The distributed computing engine 113 and the container management cluster 114 are execution engines running on different cluster managers - the distributed computing engine 113 is configured to run on an engine for clusters (such as an Apache Spark native cluster), while the container management cluster 114 is configured to run on top of a containerised environment (for example, it can be an Apache Hadoop YARN platform). The database component 116 provides auxiliary database services for whole solution. It stores mainly configuration data used by the flow management and orchestration component 111 and by the container application development environment 112, such as a list of POS (Point Of Sales), a list of products, a list of promotions, calendars, data of users and their permissions, etc. The storage services component 117 provides auxiliary cloud storage services for the whole solution, such as SMB shares and object storage to store logs, web images needed by the UI (112), certificates etc.

A customer environment 130 is a source of raw data which is then processed in the distributed computing engine 113 and the container management cluster 114. The customer environment 130 includes components relevant from a perspective of business process data sources, such as relational data bases systems, NoSQL bases, file shares, web-service endpoints and other. It can be placed on premise or public cloud. If the customer environment 130 is located outside the cloud environment 110, it shall be connected with the cloud environment 110 via a virtual private network (VPN) connection 121 to provide secure transmission and isolate the connection from third parties. If placed within the same cloud (for example, Microsoft Azure) as the cloud environment 110, the VPN connection 121 is not necessary.

An application (app) provider environment 140 acts as an infrastructure provider orchestrator delivering core solution components on demand. It provides cloud environment settings and components in a highly automated manner. When the system is installed for a particular customer, the application provider environment 140 initialises a set of tasks to create, provide and configure all components on the cloud environment 110 for that customer. The application provider environments comprise a version control component that stores scripts, container images, application code and libraries. A distributed computed cluster 142 serves as an execution engine which runs all scripts and creates infrastructure in the cloud environment 110.

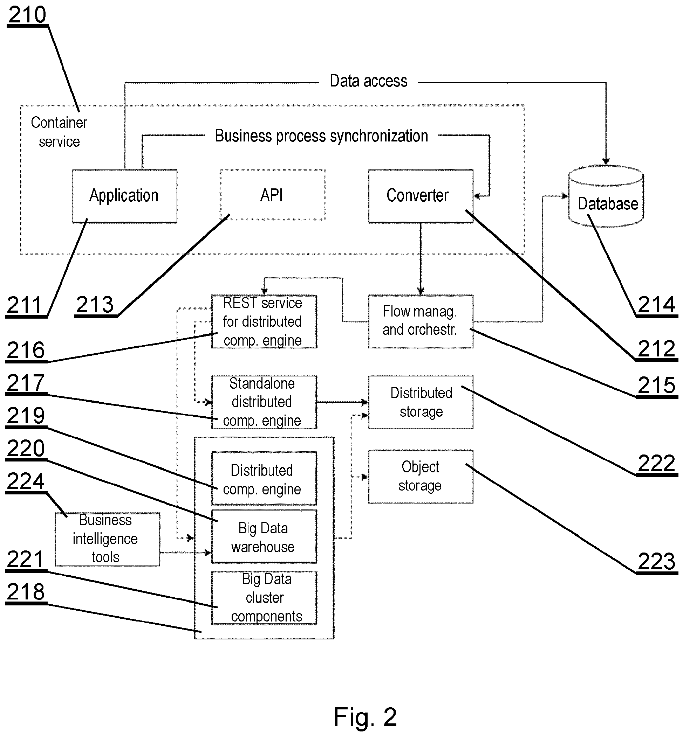

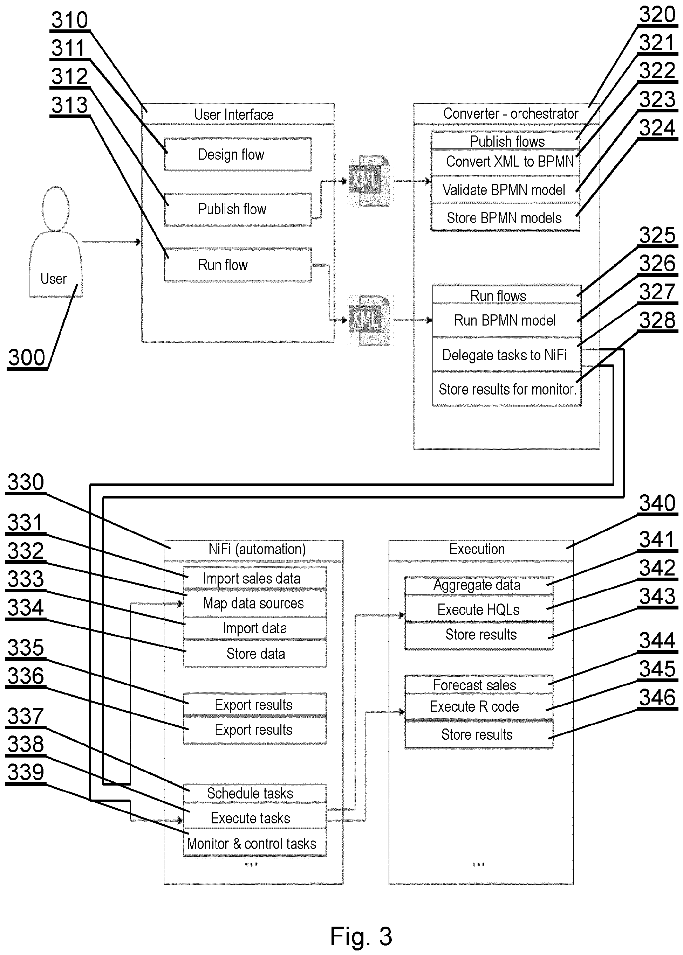

Fig. 2 shows network interconnections between components. The core components are the application component 211 and the converter component 212. Both components 211, 212 are containerised by the container service 210 (such as a server or a virtual machine) and communicate using their application program interface (API) 213. The container service 210 is handled by the cloud environment 110, in particular by the container application development environment 112. The application component 211 has a front-end layer (in which the customer can design, then publish and finally run a data flow) and a back-end layer which communicates with a database 214. The front-end layer handles a user interface (UI) component 310, as described in Fig. 3.

The database 214 is localised on the customer environment 130 and provides data, for example sales data such as the number of products sold per each point of sale (POS), sales of promoted products, etc. The application component 211 must be connected to the database 214 because it is necessary to map all the sources in the publish flows and to achieve this goal, access to viewing customer database metadata is needed.

The application component 211 communicates with the converter component 212 that converts XML files to BPMN models and then to a set of steps which can be run on the flow management and orchestrator component 215.

The flow management and orchestration component 215 (that corresponds to component 111) is responsible for importing data from the database and task execution. To achieve those goals it is connected with the database 214 from where it can fetch the data and with the REST service 216 for distributed computed engine through which it orders the tasks to be performed. The flow management and orchestrator component 215 can be implemented for example as an Apache NiFi engine.

The REST service 216 for distributed computed engine functions as an access entry point to a standalone distributed computed engine 217 (which corresponds to element 113 Fig. 1) or to a container management cluster 218 (which corresponds to element 114 of Fig. 1) which comprises a distributed computed engine 219, a Big Data Warehouse 220 and may further comprise other auxiliary Big Data Cluster Components 221, such that allow monitoring and managing comprehensive data security (for example, Apache Ranger) or facilitate reading, writing, and managing large datasets (for example, Apache Hive).

The distributed storage 222 and the object storage 223, handled by the storage services 117, serve subsidiary roles for the computing engines 217 and 219 on both of which the final results of processing are stored together with the intermediary calculations created during whole process.

A business intelligence (BI) tools component 224, handled at the customer environment 130, is optional and contains applications which can be installed on the customer side but can communicate with the Big Data warehouse 220 environment to fetch the computed data and present them on dashboards or reports. For example, these can be tools such as Tableau or IBM Cognos.

Fig. 3 presents a diagram of functional components and interactions between system components from the user's perspective.

One or more users 300 may interact with the system through the user interface (UI) component 310, handled by the application component 211, which serves as a user-friendly presentation layer where users can create, publish and execute data flows. A design flow component 311 is configured to allow the user to create graphical views of business process flows, which are easy to understand for laypersons. These business process flows can be serialized into XML files, but this is not required, as serialization format can be changed. The publish flow component 312 is responsible for sending the XML files representing the business process flows to a converter component 320 where these flows are converted into a BPMN model. The run flow 313 component is configured to receive the business process flow and allow scheduling and executing the business processes designed in the design flow component 311.

The converter-orchestrator component 320, handled by the converter component 212, comprises a publish flows component 321 configured to convert the XML file to the BPMN model (322), validate that model (323) and version controlling (324). The converter component 320 further comprises a run flows component 325 is configured to translate the BPMN models into a set of executable tasks (by the run BPMN model component 326), to delegate execution of tasks to NiFi (327), and to store results (in steps 343, 346) for monitoring (328). The important effect of the operation of the converter component 320 is the conversion of the BPMN models into the set of executable tasks ready to analyse massive amounts of data. Communication between the converter 320 and the NiFi component 327 is realized using HTTP protocol and REST architectural style. The run BPMN model component 326 sends task operations in form of HTTP POST requests which contain HQL and R code snippets to the dedicated NiFi processor which serves as HTTP endpoint.

The NiFi engine layer 330, handled by the flow management and orchestration component 215, is primarily responsible for importing sales data (331), scheduling tasks (337) and finally exporting results (335). The import sales data component 331 is configured to data from source systems localised on the customer environment 130. The process includes mapping data sources (332), importing data (333) and storing data (334), after which data is localized on distributed storage 222 on the public cloud. When the process of data import is finished, then the NiFi engine can start the next phases grouped in the schedule task component 337, wherein the execution task component 338 prompts execution of HQL and R code scripts on the execution tier 340.

The execution tier 340 is handled by standalone distributed computing engine 217 or by the big data cluster components 221. It can be an Apache Spark analytics engine which can run under native Standalone or Hadoop YARN cluster management. The execution tier 340 can both aggregate data 341 and present a forecast for sales 344. Scripts run by the execution tier 340 in components 342, 345 also store results 343, 346 locally and those results are accessible by the BI Tools 224.

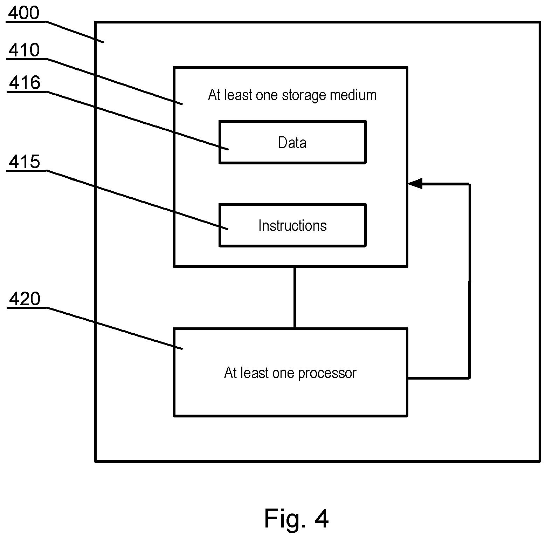

The functionality described herein can be implemented in a computer system, which includes one or more computers as shown in Fig. 4, connected in a network. The computer 400 may include at least one nontransitory processor-readable storage medium 410 that stores at least one of processor-executable instructions 415 or data 416; and at least one processor 420 communicably coupled to the at least one nontransitory processor-readable storage medium 410. The at least one processor 420 ay be configured to (by executing the instructions 415) support the functionality of one or more components as described in Fig. 3.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A computer-implemented system for handling and processing executable data flows, the system comprising:
- a cloud environment (110) comprising:
- a flow management and orchestration component (111, 215),
- a container application development environment (112), and
- a computing engine (113, 114) configured to operate on Big Data;
- a database (214) at a customer premises environment (130) that stores data to be processed;
- wherein the container application development environment (112) is configured to handle an application component (210) to provide a user interface (311) to receive from a user a graphical view of a business process flow and a converter component (212) to convert (320) the graphical view to a Business Process Model and Notation (BPMN) model;
- wherein the flow management and orchestration component (111, 215) is configured to translate (325) the BPMN model into a set of executable tasks (326), import (333) data to be processed from the database (214) and to delegate (327) execution of the set of executable tasks to the computing engine (113, 114).

2. The system of claim 1, wherein the computing engine is a distributed computing engine (113) that is configured to run on an engine for clusters.

3. The system of any of previous claims, wherein the computing engine is a container management cluster (114) that is configured to run on top of a containerized environment.

4. The system of any of previous claims, wherein the flow management and orchestration component (111, 215) is configured to delegate (327) execution of the set of executable tasks by means of an engine for automating data flows (330) that is an Apache NiFi engine.

5. A computer-implemented method for handling and processing executable data flows, the method comprising:
- providing a user interface (311) to receive from a user a graphical view of a business process flow;
- converting (320) the graphical view to a Business Process Model and Notation (BPMN) model;
- translating (325) the BPMN model into a set of executable tasks (326);
- delegating (327) execution of the set of executable tasks to an engine for automating data flows (330), wherein the engine for automating data flows is configured to operate on Big Data; and
- within the engine for automating data flows (330), importing (333) data to be processed and executing (337) the set of executable tasks upon the data to be processed at a computing engine (113, 114) to aggregate data (341) and to determine a data forecast (344).

6. The method according to claim 5, further comprising storing (328) results for monitoring.

7. The method according to any of claims 5-6, wherein the data to be processed are sales data.
